Europäisches Patentamt

European Patent Office

Office européen des brevets

(19)

(11) **EP 1 426 331 B1**

(12) **EUROPÄISCHE PATENTSCHRIFT**

(45) Veröffentlichungstag und Bekanntmachung des Hinweises auf die Patenterteilung:
**30.03.2005 Patentblatt 2005/13**

(51) Int Cl.[7]: **C01B 17/38**, B01J 2/04

(21) Anmeldenummer: **03022119.6**

(22) Anmeldetag: **30.09.2003**

(54) **Verfahren zur Herstellung von wasserfreiem Alkalisulfid**

Process for the preparation of anhydrous alkali metal sulfide

Procédé de production de sulfure de métal alcalin anhydre

(84) Benannte Vertragsstaaten:
**BE DE FR IT**

(30) Priorität: **04.12.2002 DE 10256531**

(43) Veröffentlichungstag der Anmeldung:
**09.06.2004 Patentblatt 2004/24**

(73) Patentinhaber: **Degussa AG**
**40474 Düsseldorf (DE)**

(72) Erfinder:
• **Alt, Hans Christian**
**63571 Geinhausen-Meerholz (DE)**
• **Gölz, Andreas**
**63517 Rodenbach (DE)**

• **Alig, Alfred**
**63826 Geiselbach-Omersbach (DE)**

(56) Entgegenhaltungen:
WO-A-01/25146          US-A- 3 316 309

• JAN Y ANDERSSON ET AL: "Mechanisms and Kinetics of the Thermal Decomposition of Sodium Sulphide Pentahydrate under Controlled Water Vapour Pressure" , JOURNAL OF THE CHEMICAL SOCIETY, DALTON TRANSACTIONS, CHEMICAL SOCIETY. LETCHWORTH, GB, PAGE(S) 469-475 XP002094813 ISSN: 1472-7773 * das ganze Dokument *

**Beschreibung**

Die Erfindung betrifft ein Verfahren zur Herstellung von wasserfreiem Alkalisulfid.

In trockenem Zustand und fein verteilt können Alkalisulfide bei erhöhter Temperatur mit Luft reagieren, woraus erhebliche Gefahrenpotentiale und Produktverluste bei der thermischen Trocknung entstehen. Dies stellt eine hohe verfahrenstechnische und sicherheitstechnische Hürde beim Betreiben eines derartigen Prozesses dar.

Aus EP 0 924 165 A1 ist die Herstellung von wasserfreiem Alkalisulfid, ausgehend vom kristallwasserhaltigen Feststoff, mittels Vakuumkontakttrocknung bekannt.

Ferner ist aus WO 01/25146 die konvektive Sprühtrocknung von wasserfreien Alkalisulfiden mittels heißen, wasserfreien Inertgasen bekannt.

Nachteil der bekannten Verfahren, die wasserfreie Inertgase, wie zum Beispiel Stickstoff, als Trocknungsgas im Durchtrittsbetrieb verwenden, sind die hohen Betriebskosten. Eine Kreisgasführung ist deshalb anzustreben. Rückgeführtes Kreisgas kann aber nicht mehr vollständig wasserfrei sein und muß deshalb getrocknet werden.

Aufgabe der Erfindung ist es, ein Verfahren zur Verfügung zu stellen, bei dem ein Kreisgasbetrieb ohne Trocknung des Gases möglich ist.

Gegenstand der Erfindung ist ein Verfahren zur Herstellung von wasserfreiem Alkalisulfid, welches dadurch gekennzeichnet ist, daß man eine Alkalisulfidlösung, Alkalisulfidsuspension, Alkalisulfiddispersion oder Alkalisulfidkristallwasserschmelze durch Sprühtrocknung mit Wasserdampf beladenem inertem Trocknungsgas trocknet.

Das inerte Trocknungsgas kann Stickstoff, Helium, Argon oder eine Mischung der genannten Gase sein. Das mit Wasserdampf beladene inerte Trocknungsgas kann reiner überhitzer Wasserdampf sein. Die Wasserdampfbeladung des mit Wasserdampf beladenen inerten Trocknungsgases kann größer 1g/kg (Taupunkt über -15°C), bevorzugt größer 5g/kg (Taupunkt über 5°C), besonders bevorzugt größer 15g/kg (Taupunkt über 20°C), sein.

Alkalisulfid kann Dialkalisulfid, Alkalihydrogensulfid oder Alkalipolysulfid sein.

Die Alkalisulfidlösung, Alkalisulfidsuspension, Alkalisulfiddispersion oder Alkalisulfidkristallwasserschmelze kann in einer Kammer versprüht werden mit einem Feststoffanteil von 10 Gew.-% < $X_{TS}$ < 95 Gew.-%, bevorzugt 20 Gew.-% < $X_{TS}$ < 70 Gew.-%, besonders bevorzugt 40 Gew.-% < $X_{TS}$ < 70 Gew.-%.

Die Alkalisulfidlösung kann eine Lösung von Alkalisulfid in Wasser sein.

Als Alkalisulfide können $Na_2S * xH_2O$ ($3 \leq x \leq 9$) verwendet werden.

Das wasserfreie Alkalisulfid, hergestellt durch das erfindungsgemäße Verfahren, kann einen Restwassergehalt von kleiner 10,0 Gew.-%, vorzugsweise kleiner 3,0 Gew.-%, besonders bevorzugt kleiner 1,5 Gew.-%, besitzen.

Bei dem Sprühtrocknungsverfahren kann innerhalb des Verfahrensraumes eine flüssige Stoffzubereitung (Lösung, Suspension, Dispersion oder Schmelze von Alkalisulfid), im weiteren Trocknerspeise genannt, zerstäubt und mit einem heißen Gasstrom in Kontakt gebracht werden. Dadurch kann das Lösungsmittel ganz oder teilweise verdampft werden und es entsteht ein Abgasstrom, bestehend aus dem Trocknungsgas, den Feststoffpartikeln und dem dampfförmigen Lösungsmittel. Im Anschluss kann die Abtrennung des Feststoffes aus dem Abgasstrom erfolgen.

Die dem System zu- oder abgeführte Energiemenge kann proportional zum Trocknungsgasstrom sein. Zur Steigerung des Durchsatzes des Verfahrens kann der Trocknungsgasstrom und die Trocknungsgaseingangstemperatur erhöht werden.

Das Versprühen oder Zerstäuben der Trocknerspeise im Verfahrensraum kann mittels Zentrifugalzerstäubern oder mittels Düsen erfolgen. Durch die Düsen können gleichzeitig ein oder mehrere Stoffe durchgeleitet werden. Diese können als Druckdüsen oder als pneumatische Zerstäuber ausgeführt sein. Im Fall der Druckdüsen kann lediglich die unter Druck stehende Trocknerspeise versprüht werden. Werden hingegen pneumatische Zerstäuber eingesetzt, so können zusätzlich zu den flüssigen Stoffen Zerstäubergas und Düsenreinigungsgas versprüht werden. Die technische Ausführung der Düsen oder die Eindüsrichtung in den Verfahrensraum kann prinzipiell frei gewählt werden und ist produktabhängig. Die Anzahl der Stoffe, die maximal durch eine Düse geleitet werden können, soll keinesfalls limitierend für die Trocknung von Alkalisulfiden sein. Das eingesetzte Hilfsgas zur Zerstäubung kann ein sauerstoffarmes, mit kleiner 0,1 Vol.-%, bevorzugt kleiner 0,05 Vol.-%, Sauerstoff oder sauerstofffreies Inertgas sein.

Durch Wärmeübergang vom Trocknungsgas zu den feuchten Partikeln kann das Lösungsmittel verdunstet werden.

Das Trocknungsgas kann beim Passieren des Verfahrensraumes verdampfendes Lösemittel aufnehmen und aus dem Prozess austragen.

Die Sprühtrocknung kann kontinuierlich, aber auch batchweise durchgeführt werden. Vorzugsweise kann im Kreisgasbetrieb ein Teilstrom des Kreisgases zyklisch eingesetzt werden.

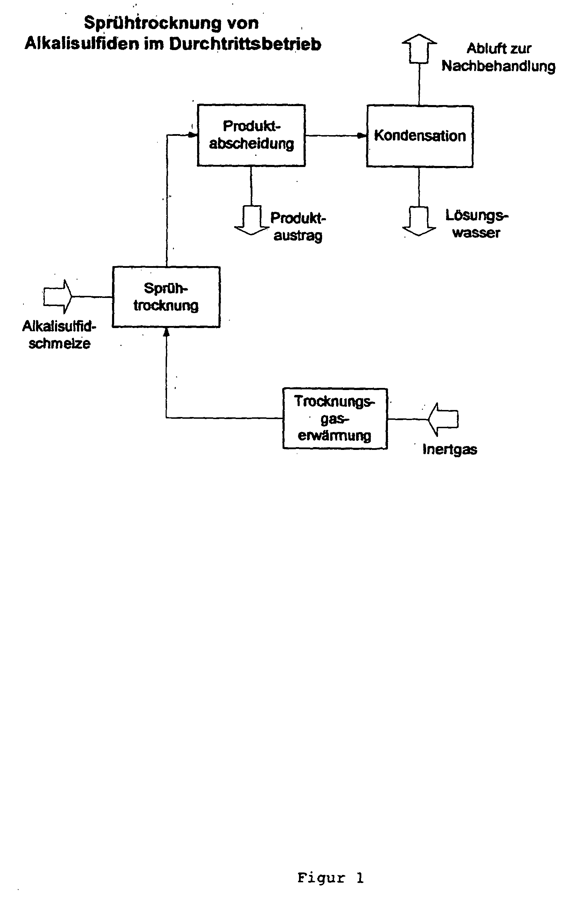

Das erfindungsgemäße Verfahren kann im Durchtrittsbetrieb gemäß Figur 1 betrieben werden.

Im Durchtrittsbetrieb kann als Trocknungsgas Inertgas erwärmt werden. Vorzugsweise kann das Trocknungsgas ein sauerstoffarmes, mit kleiner 0,1 Vol.%, bevorzugt kleiner 0,05 Vol.%, Sauerstoff oder sauerstofffreies Gas sein. Die Trocknungsgaserhitzer können elektrisch, mit Dampf oder mit Wärmeträgermedien betrieben werden. Zum wirtschaftlichen Betreiben der Trocknungsanlage kann eine Kombination der Trocknungsgaserhitzer zweckmäßig sein.

Das Trocknungsgas kann dann zum Sprühtrocknen der Trocknerspeise eingesetzt werden. Die Sprühtrocknung kann bei Überdruck, Normaldruck oder Unterdruck durchgeführt werden. Ein günstiger Verfahrensdruckbereich kann dann gegeben sein, wenn mit dem Trocknungsgas, bei maximal zulässiger Systemtemperatur, spezifikationsgerechtes Pulver bei maximaler Kapazität erzeugt wird. Da ein Sauerstoffeinbruch in das System vermieden werden muss, kann die Anlage vorzugsweise im Normaldruck oder leichtem Überdruck von $\Delta p=0$ bis 200 mbar über Umgebungsdruck betrieben werden. Das erhitzte Trocknungsgas innerhalb des Verfahrensraumes kann eine Temperatur von 250° bis 800°C besitzen, sodass bei Kontakt der Trocknerspeise mit dem Trocknungsgas das Lösungsmittel verdampft.

Anschließend kann die Produktabscheidung mit Produktaustrag erfolgen. Der Produktstrom kann in geeigneter Weise aus dem Abgasstrom abgeschieden werden, durch beispielsweise Filter oder Zyklone, gegebenenfalls gekühlt und nach Bedarf unter Schutzgasatmosphäre gelagert oder abgefüllt werden. Werden zur Staubabscheidung Oberflächenfilter mit Druckstoßabreinigung eingesetzt, so kann die Abreinigung mit jedem sauerstofffreien Gas, vorzugsweise aber mit vorgewärmten Inertgas oder einem Teilstrom des Trocknungsgases, erfolgen.

Das Lösungsmittel kann kondensiert und die Abluft nachbehandelt werden.

Im Durchtrittsbetrieb wird immer wieder frisches Trocknungsgas in den Verfahrensraum geleitet und das aus dem Verfahrensraum austretende Abgas verworfen.

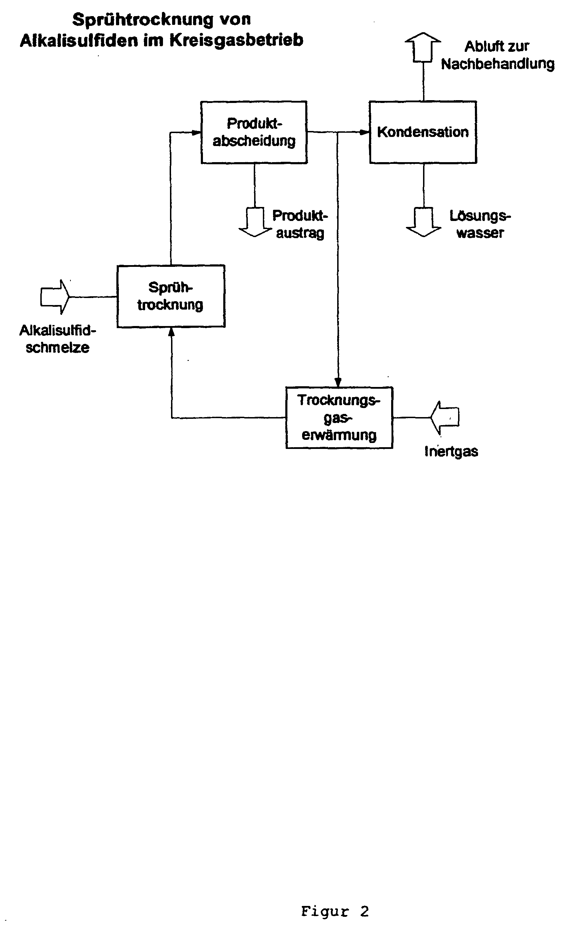

Das erfindungsgemäße Verfahren kann im Kreisgasbetrieb gemäß Figur 2 betrieben werden. Der Unterschied zum Durchtrittsbetrieb ist, daß das Abgas rezykliert und durch Energiezufuhr so konditioniert werden kann, dass es wiederum als Trocknungsgas eingesetzt werden kann. Bei der Konditionierung kann dem Abgas die im Verfahrensraum verdampften Flüssigkeitsbestandteile teilweise wieder entzogen werden, so dass diese ebenfalls rezykliert werden können. Möglichst vollständige Kreisgasführung mit Ausschleusung der überschüssigen Lösungsmittel und Inertgase ist unter wirtschaftlichen Aspekten anzustreben. Im Kreisgasbetrieb kann das eingesetzte reine Inertgas sukzessive mit den Lösemitteldämpfen angereichert werden. Nach einiger Zeit kann sich eine Gleichgewichtszusammensetzung des Trocknungsgases einstellen, die vom Anteil an zusätzlich eingebrachtem Inertgas und dem Anteil verdampfender Lösungsmittel bestimmt wird.

Das wasserdampfhaltige Abgas kann verworfen oder vorzugsweise der Wasserdampf kondensiert und das Gas erneut zum Einsatz als Trocknungsgas aufbereitet werden.

Bei dem bevorzugten Verfahren gemäß Figur 2 - Vermeidung der weiteren Einspeisung von Inertgasen in den laufenden Prozess - kann die Trocknung im stationären Betrieb in reinem überhitztem Wasserdampf erfolgen, wobei die in dem Verfahrensraum versprühte Wassermenge ausgeschleust werden kann. Eine Nachbehandlung des möglicherweise geruchsbelasteten Abgases kann bei dieser Fahrweise vollständig entfallen.

Die mit dem erfindungsgemäßen Verfahren hergestellten Alkalisulfide können einen Mittelwert der erzeugten Partikelgrößenverteilungen von 15 µm bis 800 µm, bevorzugt 20 µm bis 300 µm, besonders bevorzugt 30 µm bis 150 µm, aufweisen und können pulverförmig sein.

Durch den vorzugsweisen Verzicht auf den Einsatz von Inertgasen im stationären Betrieb kann kein schadstoffhaltiges Abgas entstehen, das aufwendig zu reinigen wäre.

Das erfindungsgemäße Verfahren hat den Vorteil, daß das Kreisgas nicht getrocknet werden muß und somit die Betriebskosten und damit die Herstellkosten niedriger sind. Ohne Verbrauch von teuren sauerstofffreien Inertgasen ist auf diese Weise ein sicherer Anlagenbetrieb möglich.

Eine Vorrichtung zur Durchführung des erfindungsgemäßen Verfahrens kann aus folgenden Bestandteilen bestehen:

- eine Trocknungskammer,
- ein in diese Kammer eingebrachtes Zerstäubungsorgan für die Trocknerspeise,
- ein Zuführorgan für das Trocknungsgas,
- eine Austragsöffnung für den Abgasstrom,
- ein Feststoffabscheidesystem, das über diese Austragsöffnung mit der Kammer verbunden wird, und das ein gegebenenfalls mit der Filtereinheit versehenes Abluftrohr zur Abführung des Gasstromes enthält,
- eine Rückgewinnungsanlage des Lösemittels aus dem Abgasstrom und
- eine Rezyklierungs- und Konditionierungs-Apparatur zur mindestens teilweisen Rezyklierung und Konditionierung des Abgases zum erneuten Einsatz als Trocknungsgas (Kreisgasfahrweise).

**Beispiele:**

In einem Glasbehälter wird bei einer Temperatur von 120 °C $Na_2S * 3H_2O$ aufgeschmolzen. Die resultierende Schmelze besitzt einen Wasseranteil von ca. 41 Gew.-%. Für die Förderung der Schmelze zum Trockner wird eine Zahnradpumpe eingesetzt. Die Verdüsung der Schmelze in den Trockner erfolgt mit einer Zweistoffdüse (Modell Schlick 970-S4) mit einem Düsendurchmesser von 1,2 mm. Die Düse wird mit einem Gasdruck von 3 bar und einem Zerstäubungsgasdurchsatz von 4,5 m$^3$/h betrieben.

Der verwendete Sprühtrockner besteht aus einer Trocknungskammer mit einem Durchmesser von 150 mm und einer

EP 1 426 331 B1

Höhe von 830 mm. Davon mißt der zylindrische Teil 630 mm und der konische Teil 200 mm. Zur Produktabscheidung sind ein Zyklon mit einem Durchmesser von 80 mm und einer Höhe von 300 mm sowie ein Filter in Reihe geschaltet. Zur weiteren Reinigung des Abgasstromes wird ein mit Wasser betriebener Wäscher eingesetzt.

Die Erwärmung des Trocknungsgases erfolgt mit einem elektrischen Gaserhitzer. Als Trocknungsgas werden Stickstoff und Wasserdampf aus dem Leitungsnetz eingesetzt. Der Wasserdampf wird von 10 bar auf Atmosphärendruck entspannt, durch einen Kondensationsabscheider geleitet und anschließend überhitzt. Das Trocknungsgas wird mit einer Temperatur von 600 °C in die Trocknungskammer geleitet, wo es in Kontakt mit der versprühten Schmelze kommt und das Lösungsmittel (Kristallwasser) verdampft. Die Trocknung findet bei einer Abgastemperatur zwischen 100 und 350°C statt, wobei der Mengenstrom der Schmelze die Austrittstemperatur des Trocknungsgases regelt. Der aus der Trocknungskammer austretende Gasstrom passiert den Zyklon und den Filter, wo der trockene Feststoff abgeschieden wird. Die Partikelgröße des abgeschiedenen Feststoffes liegt zwischen 20 - 120 $\mu$m. Die Trocknung wird im Saugbetrieb durchgeführt. Die Bestandteile der Apparatur sind aus Glas und Edelstahl gefertigt.

In Tabelle 1 sind die Einstellungsparameter und die Restfeuchten angegeben.

Tabelle1

| Parameter | Einheit | Vergleichsversuche | | | | | | Beispiele | | | | |
|---|---|---|---|---|---|---|---|---|---|---|---|---|
| Trocknungsgasstrom | m$^3$/h | 35 | | | | | | | | | | |
| Düsentreibgas N$_2$ | m$^3$/h | 4,5 | | | | | | | | | | |
| Eintrittstemperatur | °C | 600 | | | | | | | | | | |
| Abgastemperatur | °C | 100 | 150 | 200 | 250 | 300 | 350 | 150 | 200 | 250 | 300 | 350 |
| Trocknungsgas | | Stickstoff | | | | | | Wasserdampf | | | | |
| Restfeuchte | Gew.-% | 10,6 | 4,7 | 1,2 | 0,5 | 0,2 | 0,1 | 9,8 | 4,3 | 1,5 | 0,7 | 0,3 |

Die Beispiele des erfindungsgemäßen Verfahrens zeigen eine Restfeuchte unter 10 Gew.-% bei Verwendung von Wasserdampf als Trocknungsgas.

Bestimmung der Restfeuchte

19,5 g Na$_2$S*xH$_2$O wird im 1000 ml Meßkolben eingewogen, in voll entsalztem Wasser gelöst und der Kolben bis zur Eichmarke aufgefüllt. Von dieser Lösung werden entweder genau 10 ml abpipettiert oder 10,0 g auf der Präzisionswaage in einen 300 ml Erlenmeyerkolben mit Schliff eingewogen und mit ca. 90 ml voll entsalztem Wasser aus einem Meßzylinder verdünnt. Mit dem Metrohm Dosimat wird unter leichtem Rühren mit einem Magnetrührer 60 ml Iodlösung (0,05 mol/Liter) hineinpipettiert, dabei wird die Lösung durch ausfallenden Schwefel mit der Zeit trüb und später durch den Überschuß an Iodlösung braun gefärbt. Da es sich bei der Iodometrie um eine Zeitreaktion handelt bleibt die Reaktionslösung 15 Minuten bei Raumtemperatur stehen und wird in dieser Zeit zwischendurch häufiger geschüttelt. Die Aufbewahrung während dieser Zeit erfolgt im geschlossenen Kolben und nach Möglichkeit im Dunkeln, da Iod flüchtig ist beziehungsweise durch Lichteinstrahlung Iodid zu Iod oxidiert wird.

Nach dieser Reaktionszeit wird das überschüssige Iod mit einer 0,1 n Natriumthiosulfatlösung titriert. Bei der Titration wird zunächst soviel Normallösung zugesetzt, bis die Lösung von vorhandenem Iod gerade noch braun gefärbt ist. Nach Zusatz von 2 ml Stärkelösung (blaue Farbe), wird bis zum Farbumschlag weiter titriert und die verbrauchte Menge Thiosulfat-Lösung notiert. Von jeder gelösten Probe wird eine Dreifachbestimmung durchgeführt.

Berechnung:

Das Natriumsulfid reagiert mit Iod im Molverhältnis 1:1. Für die Titration von 10,0 g einer Na$_2$S-Lösung aus 19,5 g Na$_2$S (100%ig) in 1000 ml H$_2$O wird genau 50,0 ml einer Iodlösung mit c = 0,05 mol/Liter verbraucht. Bei einer Vorlage von 60,0 ml Iodlösung müssen noch 10,0 ml mit 10,0 ml Natriumthiosulfatlösung c = 0,1 mol/Liter zurücktitriert werden. Über den Mehrverbrauch an Natriumthiosulfatlösung wird nun der Wirkstoffanteil und dann der Wassergehalt des eingesetzten Na$_2$S nach folgender Formel berechnet:

$$\frac{(V(I_2)-V(Na_2S_2O_3)) \,*0,05 \text{ mol/l} *M \,(Na_2S)}{\text{Einwaage } Na_2S \,[g]}*100*100 = \text{Wirkstoffgehalt in Gew.\%}$$

$V(I_2)$ = Volumen vorgelegte Iodlösung in Liter
$V(Na_2S_2O_3)$ = Verbrauch an Natriumthiosulfatlösung in Liter
$M(Na_2S)$ = Molmasse von Natriumsulfid in g/Mol
$ml(Na_2S)$ = Einwaage der $Na_2S$-Probe in g
Restfeuchte in Gew.-% = 100 - Wirkstoffgehalt in Gew.-%

**Patentansprüche**

1. Verfahren zur Herstellung von wasserfreiem Alkalisulfid, **dadurch gekennzeichnet, dass** man eine Alkalisulfidlösung, Alkalisulfidsuspension, Alkalisulfiddispersion oder Alkalisulfidkristallwasserschmelze durch Sprühtrocknung mit Wasserdampf beladenem inertem Trocknungsgas trocknet.

2. Verfahren zur Herstellung von wasserfreiem Alkalisulfid gemäß Anspruch 1, **dadurch gekennzeichnet, dass** man bei Normaldruck oder leichtem Überdruck von $\Delta p=0$ bis 200 mbar über Umgebungsdruck trocknet.

3. Verfahren zur Herstellung von wasserfreiem Alkalisulfid gemäß Anspruch 1, **dadurch gekennzeichnet, dass** man den Einsatz von Inertgas im stationären Betrieb vermeidet.

4. Verfahren zur Herstellung von wasserfreiem Alkalisulfid gemäß Anspruch 1, **dadurch gekennzeichnet, dass** man das Trocknungsgas im Kreis führt, den Einsatz von Inertgas im stationären Betrieb vermeidet und Überschusswasserdampf durch Kondensation abgasfrei ausschleust.

**Claims**

1. Process for producing anhydrous alkali sulfide, **characterised in that** an alkali sulfide solution, alkali sulfide suspension, alkali sulfide dispersion or alkali sulfide water of crystallisation melt is dried by spray drying with inert drying gas loaded with water vapour.

2. Process for producing anhydrous alkali sulfide according to claim 1, **characterised in that** drying is performed under normal pressure or a slight overpressure of $\Delta p=0$ to 200 mbar above ambient pressure.

3. Process for producing anhydrous alkali sulfide according to claim 1, **characterised in that** the use of inert gas in stationary operation is avoided.

4. Process for producing anhydrous alkali sulfide according to claim 1, **characterised in that** the drying gas is recycled, the use of inert gas in stationary operation is avoided and excess water vapour is removed by condensation so that it is free from exhaust gases.

**Revendications**

1. Procédé de production de sulfure de métal alcalin anhydre,
   **caractérisé en ce qu'**
   on sèche une solution de sulfure de métal alcalin, une suspension de sulfure de métal alcalin, une dispersion de sulfure de métal alcalin ou une masse fondue dans une eau de cristallisation de sulfure de métal alcalin, par séchage par pulvérisation avec un gaz de séchage inerte chargé de vapeur d'eau.

2. Procédé pour la production de sulfure de métal alcalin anhydre selon la revendication 1,
   **caractérisé en ce qu'**
   on sèche à la pression normale ou sous une légère surpression de $\Delta p = 0$ à 200 mbars au-dessus de la pression ambiante.

3. Procédé pour la production de sulfure de métal alcalin anhydre selon la revendication 1,
   **caractérisé en ce qu'**
   on évite l'utilisation de gaz inerte dans des conditions de fonctionnement stationnaires.

4. Procédé pour la production de sulfure de métal alcalin anhydre selon la revendication 1,
**caractérisé en ce qu'**
on fait circuler le gaz de séchage en circuit fermé, on évite l'utilisation de gaz inerte dans des conditions de fonctionnement stationnaires et on évacue, en l'absence de gaz effluent, la vapeur d'eau en excès par condensation.

**Sprühtrocknung von
Alkalisulfiden im Durchtrittsbetrieb**

Figur 1

## Sprühtrocknung von
## Alkalisulfiden im Kreisgasbetrieb

Figur 2